Europäisches Patentamt

European Patent Office

Office européen des brevets

(19)

(11) Veröffentlichungsnummer: **0 183 227**
**B1**

## EUROPÄISCHE PATENTSCHRIFT

(12)

(45) Veröffentlichungstag der Patentschrift:
07.06.89

(21) Anmeldenummer: **85114994.8**

(22) Anmeldetag: **26.11.85**

(51) Int. Cl.⁴: **H04J 3/07**

(54) Digitalsignal-Multiplexverfahren.

(30) Priorität: **27.11.84 DE 3443239**

(43) Veröffentlichungstag der Anmeldung:
**04.06.86 Patentblatt 86/23**

(45) Bekanntmachung des Hinweises auf die Patenterteilung:
**07.06.89 Patentblatt 89/23**

(84) Benannte Vertragsstaaten:
**AT BE CH DE FR GB IT LI NL SE**

(56) Entgegenhaltungen:
**DE-A- 3 213 534**

**1972 INTERNATIONAL ZURICH SEMINAR ON
INTEGRATED SYSTEMS FOR SPEECH, VIDEO AND
DATA COMMUNICATIONS, 15.-17. März 1972, Zürich,
CH, Seiten A2(1) - A2(7); T.S. HUANG et al.: "image
processing in communication systems"**

(73) Patentinhaber: **Siemens Aktiengesellschaft Berlin und
München, Wittelsbacherplatz 2, D-8000 München 2(DE)**

(72) Erfinder: **Stummer, Baldur, Dipl.-Ing.,
Wilhelm-Kuhnert-Strasse 21, D-8000 München 90(DE)**

ACTORUM AG

**Beschreibung**

Die Erfindung bezieht sich auf ein Digitalsignal-Multiplexverfahren unter Verwendung eines Multiplexteils, in dem erste plesiochrone 139,264- oder 564,992-Mbit/s-Signale in ersten Kanalteilen unter Stopfen und Einblenden von Zusatzsignalen in erste synchrone Zwischen-Zeitmultiplexsignale umgesetzt werden und in dem ein Multiplexer diese bitweise zu einem ersten Zeitmultiplexsignal höherer Ordnung verschachtelt, und unter Verwendung eines Demultiplexteils, in dem ein zweites Zeitmultiplexsignal höherer Ordnung durch einen Demultiplexer in zweite Zwischen-Zeitmultiplexsignale aufgetrennt wird und in dem in zweiten Kanalteilen diese unter Entstopfen und Ausblenden von Zusatzsignalen in plesiochrone 139,264- oder 564,992-Mbit/s-Signale umgesetzt werden.

Ein Multiplex- und Demultiplexverfahren dieser Art ist aus den deutschen Auslegeschriften 2 814 000 und 2 814 001 bekannt.

Für Digital-Übertragungssysteme wurde eine europäische Hierarchie geschaffen, die in der Zeitschrift "telcom report", 2 (1979) Beiheft Digital-Übertragungstechnik, Seiten 16 bis 20 beschrieben ist. Die vierte Stufe dieser Hierarchie arbeitet mit einer Bitrate von 139,264 Mbit/s. Die amerikanische Hierarchie enthält Bitraten von 1,544 Mbit/s, 3,152 Mbit/s, 6,312 Mbit/s, 44,736 Mbit/s und 274,176 Mbit/s.

In dem CCITT-Gelbbuch, Volume III – Fascicle III.3, Digital Networks – Transmission Systems and Multiplexing Equipment, Genf, 10-21.11.80, Seiten 218-220 ist ein Leitungsmultiplexer empfohlen, der vier 139,264-Mbit/s-Signale in ein 564,992-Mbit/s-Signal umsetzt und umgekehrt.

Aufgabe der Erfindung ist es, ein Digitalsignal-Multiplexverfahren zu realisieren, das k plesiochrone 564,992-Mbit/s-Signale, 4.k plesiochrone 139,264-Mbit/s-Signale oder k-x plesiochrone 564,992-Mbit/s-Signale zusammen mit 4.x plesiochronen 139,264-Mbit/s-Signalen zu einem Zeitmultiplexsignal zusammensetzt oder umgekehrt. k und x sind dabei ganze Zahlen.

Ausgehend von einem Digitalsignal-Multiplexverfahren der einleitend geschilderten Art wird diese Aufgabe erfindungsgemäß dadurch gelöst, daß für 564,992-Mbit/s-Signale jeder n-te Zeitschlitz im Pulsrahmen der Zwischen-Zeitmultiplexsignale für Zusatzsignale und die restlichen Zeitschlitze für die zu übertragende Nutzinformation und ein erstes stopfbares Bit vorgesehen sind, daß für jeweils vier 139,264-Mbit/s-Signale jeder n-te Zeitschlitz im Pulsrahmen der Zwischen-Zeitmultiplexsignale für Zusatzsignale und die restlichen Zeitschlitze für die vier bitweise verschachtelt zu übertragenden Nutzinformationen und je ein erstes und m zweite stopfbare Bits vorgesehen sind, daß für jeweils vier 139,264-Mbit/s-Signale ein Überrahmen aus vier Pulsrahmen vorgesehen ist, in dem in jedem Pulsrahmen als Zusatzsignale unter anderem eine Stopfinformation (SI) und eine Kanalnummer (KNr) eines 139,264-Mbit/s-Signals eingefügt sind und daß die zweiten Kanalteile (24-26) für eine Rückumsetzung aus dem gleichen Pulsrahmen vorgesehen sind.

Bei einer ersten Variante ist für die Zwischen-Zeitmultilexsignale eine Bitrate von 600,832 Mbit/s, ein Pulsrahmen mit fünfhundertvierundvierzig Zeitschlitzen, n=17 und m=1 gewählt.

Eine vorteilhafte Ausführungsform dieser ersten Variante besteht darin, daß der Pulsrahmen in vier Sätze mit je einhundertsechsunddreißig Zeitschlitzen unterteilt ist, daß in der Folge der siebzehnten Zeitschlitze im ersten Satz die ersten fünf Zeitschlitze für ein Rahmenkennungswort, der sechste und siebente Zeitschlitz zyklisch für die Kanalnummer und der achte Zeitschlitz für ein erstes Paritätsbit über die Nutzinformationsbits im zweiten und dritten Satz des vorangegangenen Pulsrahmens vorgesehen sind, daß in der Folge der siebzehnten Zeitschlitze im zweiten und vierten Satz diese für Service-Information vorgesehen sind und daß in der Folge der siebzehnten Zeitschlitze im dritten Satz die ersten fünf Zeitschlitze für eine Stopfinformation, der sechste und siebente Zeitschlitz für eine Ordnungsnummer des zu bildenden Zwischen-Zeitmultiplexsignals und der achte Zeitschlitz für ein zweites Paritätsbit über die Nutzinformationsbits im vierten Satz des vorangegangenen Pulsrahmens und im ersten Satz des gegenwärtigen Pulsrahmens vorgesehen sind.

Unter Service-Informationen sind für die Verwaltung des gesamten Übertragssystems notwendige Signale wie Telemetriesignale oder Dienstgespräche zu verstehen. Nicht benötigte Übertragungskapazität kann aber beispielsweise auch für die Abwicklung von regionalem Verkehr entlang der hochratigen Weitverkehrsstrasse eingesetzt werden.

Vorteilhaft ist es dabei, wenn für ein 564,992-Mbit/s-Signal im dritten Satz der einhundertachtundzwanzigste Zeitschlitz für das erste stopfbare, in Abhängigkeit von der Stopfinformation zu stopfende oder Nutzinformation übertragende Bit vorgesehen ist.

Vorteilhaft ist es ebenfalls, wenn für vier 139,264-Mbit/s-Signale im dritten Satz der einhundertachtundzwanzigste bis einhunderteinunddreißigste Zeitschlitz für erste stopfbare Bits vorgesehen sind, wenn im ersten Satz jeweils der einhundertachtundzwanzigste bis einhunderteinunddreißigste Zeitschlitz für zweite stopfbare Bits vorgesehen sind, wenn das erste stopfbare Bit in jenen 139,264-Mbit/s-Signalen, deren Kanalnummer im jeweiligen Pulsrahmen steht, in Abhängigkeit von der Stopfinformation in diesem Pulsrahmen gestopft oder mit Nutzinformation belegt wird und wenn alle anderen ersten und zweiten stopfbaren Bits fest gestopft werden.

Bei einer zweiten Variante ist für die Zwischen-Zeitmultiplexsignale eine Bitrate von 621,776 Mbit/s, ein Pulsrahmen mit eintausendsechsundfünfzig Zeitschlitzen, n=11 und alternierend m=3 und m=2 gewählt. Für Service-Informationen kann hier ein 47,104-Mbit/s-Signal, also beispielsweise ein 44,736- und ein 1,544-Mbit/s-Signal übertragen werden.

Eine vorteilhafte Ausführungsform dieser zweiten Variante besteht darin, daß der Pulsrahmen in vier Sätze mit je zweihundertvierundsechzig Zeitschlitzen unterteilt ist, daß in der Folge der elften Zeitschlitze elf Zeitschlitze für ein Rahmenkennungswort, für die Kanalnummer, für eine Ordnungsnummer des zu bildenden Zwischen-Zeitmultiplexsignals, und für Paritätsbits über die Nutzinformationsbits des vorangegangenen Pulsrahmens vorgesehen sind, daß in der Folge der elften Zeitschlitze achtzig Zeitschlitze für Service-Information vorgesehen sind und daß in der Folge der elften Zeitschlitze fünf Zeitschlitze für eine Stopfinformation vorgesehen sind.

Vorteilhaft ist dabei, wenn für ein 564,992-Mbit/s-Signal im vierten Satz der zweihundertsechsundfünfzigste Zeitschlitz für das erste stopfbare, in Abhängigkeit von der Stopfinformation zu stopfende oder Nutzinformation übertragende Bit vorgesehen ist.

Anhand eines Ausführungsbeispiels wird die Erfindung nachstehend näher erläutert.

Fig. 1 zeigt ein erfindungsgemäßes Digitalsignal-Multiplexgerät, zur Realisierung des erfindungsgemässen Verfahrens,

Fig. 2 zeigt einen ersten Pulsrahmen für Zwischen-Zeitmultiplexsignale,

Fig. 3 zeigt einen aus vier ersten Pulsrahmen bestehenden Überrahmen,

Fig. 4 zeigt einen zweiten Pulsrahmen für Zwischen-Zeitmultiplexsignale,

Fig. 5 zeigt einen aus vier zweiten Pulsrahmen bestehenden Überrahmen,

Fig. 6 zeigt einen ersten Kanalteil für 564,992 Mbit/s,

Fig. 7 zeigt einen ersten Kanalteil für 4x139,264 Mbit/s,

Fig. 8 zeigt einen zweiten Kanalteil für 564,992 Mbit/s und

Fig. 9 zeigt einen zweiten Kanalteil für 4x139,264 Mbit/s.

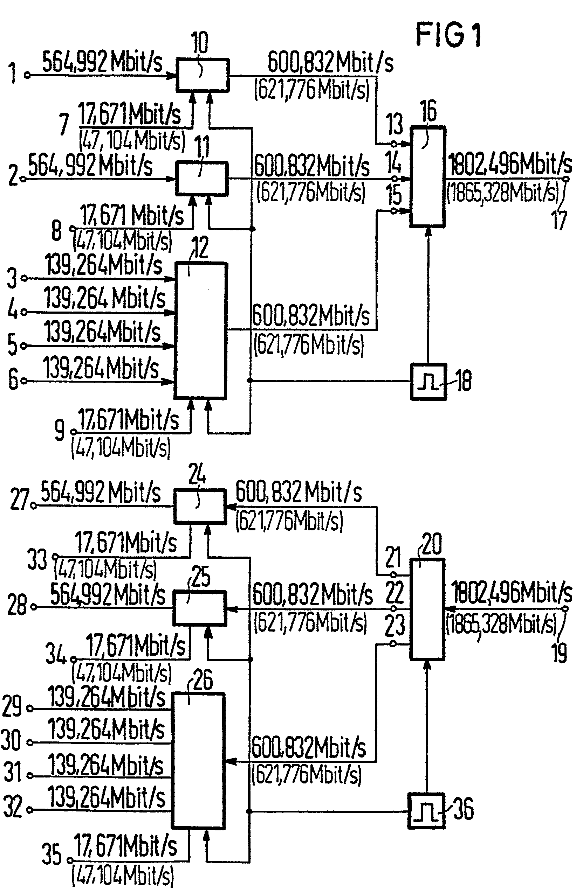

Figur 1 zeigt ein erfindungsgemäßes Digitalsignal-Multiplexgerät zur Realisierung des erfindungsgemässen Verfahrens mit k=3, x=1. Dieses enthält einen Multiplexteil 1-18 und einen Demultiplexteil 19-36.

Der Multiplexteil enthält Kanalteile 10 und 11 mit jeweils einem Eingang 1 und 2 für 564,992-Mbit/s-Signale und einen Kanalteil 12 mit Eingängen 3 bis 6 für je ein 139,264-Mbit/s-Signal. Alle Kanalteile 10 bis 12 enthalten einen Eingang 7 bis 9 für Servicebits einer Bitrate von 17,671 Mbit/s (bzw. 47,104 Mbit/s). Der Multiplexteil enthält weiter einen Multiplexer 16 mit Eingängen 13 bis 15, die jeweils mit dem Ausgang eines der Kanalteile 10 bis 12 zur Übertragung von Zwischen-Zeitmultiplexsignalen einer Bitrate von 600,832 Mbit/s verbunden sind. Am Ausgang 17 des Multiplexers 16 ist ein 1802,496-Mbit/s-Signal abnehmbar. Eine Taktzentrale 18 versorgt die Kanalteile 10 bis 12 und den Multiplexer 16 mit einem Takt.

Der Demultiplexteil enthält einen Demultiplexer 20 mit einem Eingang 19 für ein 1802,496-Mbit/s-Signal und Ausgänge 21 bis 23 für 600,832-Mbit/s-Zwischen-Zeitmultiplexsignale. Der Demultiplexteil enthält weiter Kanalteile 24 und 25, deren Eingänge mit jeweils einem Ausgang 21 und 22 des Demultiplexers 20 verbunden sind und deren Ausgänge 27 und 28 je ein 564,992-Mbit/s-Signal abgeben. Weiter ist ein Kanalteil 26 enthalten, dessen Eingang mit einem Ausgang 23 des Demultiplexers 20 verbunden ist und an dessen Ausgängen 29 bis 32 139,264-Mbit/s-Signale abnehmbar sind. Jedem der Kanalteile 24 bis 26 können an den Ausgängen 33 bis 35 Servicebits einer Bitrate von 17,671 Mbit/s bzw. 47,104 Mbit/s entnommen werden. Eine Taktversorgung 36 liefert den Kanalteilen 24 bis 26 und dem Demultiplexer 20 einen Takt.

Der Multiplexer 16 verbindet zyklisch die Eingänge 13 bis 15 mit dem Ausgang 17, der Demultiplexer 20 verbindet zyklisch den Eingang 19 mit den Ausgängen 21 bis 23.

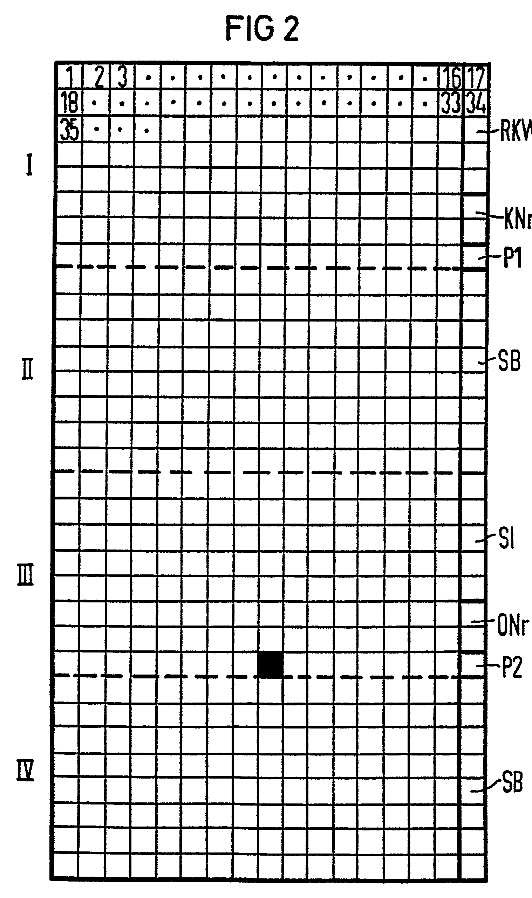

Die Wirkungsweise der Kanalteile wird anhand der Figuren 2 bis 9 näher erläutert.

Die Figur 2 zeigt für die erste Variante einen Pulsrahmen für die Zwischen-Zeitmultiplexsignale der Bitrate von 600,832 Mbit/s. Dieser Pulsrahmen enthält fünfhundertvierundvierzig Zeitschlitze. Zwecks übersichtlicher Darstellung wurde der Pulsrahmen in Teile von siebzehn Zeitschlitzen zerlegt und diese Teile untereinander in Form von zweiunddreißig Zeilen angeordnet. Weiter ist der Pulsrahmen in vier Teile I bis IV mit jeweils hundertsechsunddreißig Zeitschlitzen eingeteilt. Die Folge der siebzehnten Zeitschlitze, die die rechte Spalte bilden, dienen der Aufnahme von Zusatzinformationen. Die restlichen Spalten dienen der Aufnahme von Nutzinformationen und stopfbaren Bits.

Die rechte Spalte für die Zusatzsignale enthält ein Rahmenkennungswort RKW, eine Kanalnummer KNr, Paritätsbits P1 und P2, Servicebits SB, eine Stopfinformation SI und eine Ordnungsnummer ONr.

Im Fall der Übertragung eines 564,992-Mbit/s-Signals ist der schwarze Zeitschlitz für ein stopfbares Bit vorgesehen, das in Abhängigkeit von der Stopfinformation SI gestopft wird oder auch eine Nutzinformation überträgt.

Die Kanalnummer KNr hat lediglich bei der Übertragung von 139,264-Mbit/s-Signalen eine Bedeutung.

Das Paritätsbit P1 gibt eine Aussage über die Nutzinformationsbits in den Teilen II' und III' des vorangegangenen Pulsrahmens, das Paritybit P2 gibt eine Aussage über die Nutzinformation im Teil IV' des vorangegangenen Pulsrahmens und im Teil I des gezeigten Pulsrahmens. Die Ordnungsnummer ONr kennzeichnet die Zwischen-Zeitmultiplexsignale.

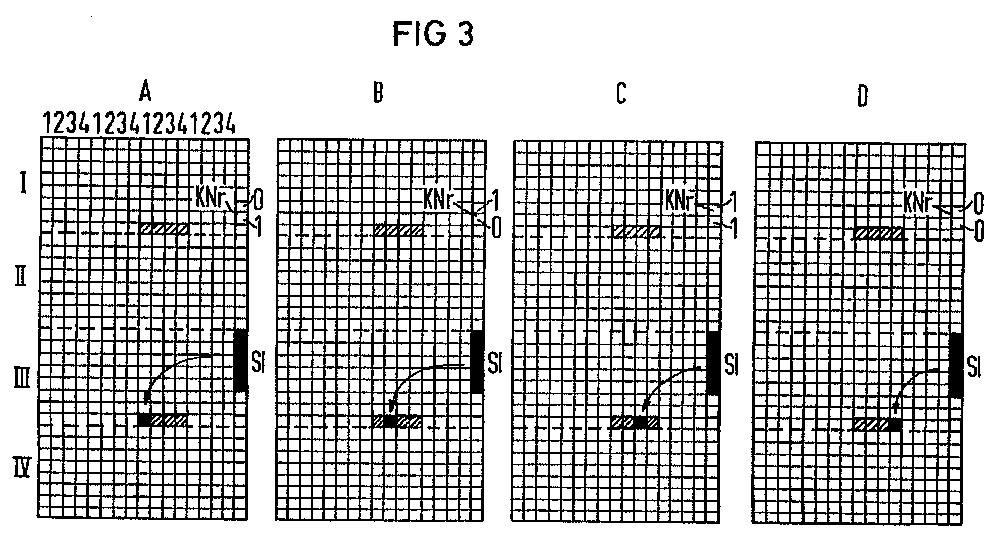

Figur 3 zeigt vier aufeinanderfolgende Pulsrahmen A bis D der Art des in Figur 2 gezeigten Pulsrahmens. Die Ziffern an der Oberseite des Pulsrahmens A bezeichnen vier bitweise verschachtelte 139,264-Mbit/s-Signale. Für die Kanalnummern KNr und die Stopfinformationen SI ist ein Überrahmen aus vier Pulsrahmen gebildet, so daß jedes 139,264-Mbit/s-Signal eine eigene Stopfinformation SI und eine eigene Kanalnummer KNr erhält.

Die außerhalb der Zusatzinformationen in den siebzehnten Zeitschlitzen schraffiert gekennzeichneten Bits sind in den Teilen I zweite stopfbare Bits und in den Teilen III erste stopfbare Bits. Der schwarze Zeitschlitz wird in Abhängigkeit von der vorhergehenden Stopfinformation SI gestopft und überträgt eine Nutzinformation. Die schraffierten Zeitschlitze sind jeweils fest gestopft, das heißt, es handelt sich um Zeitschlitze, die bei dieser Betriebsart überflüssig sind.

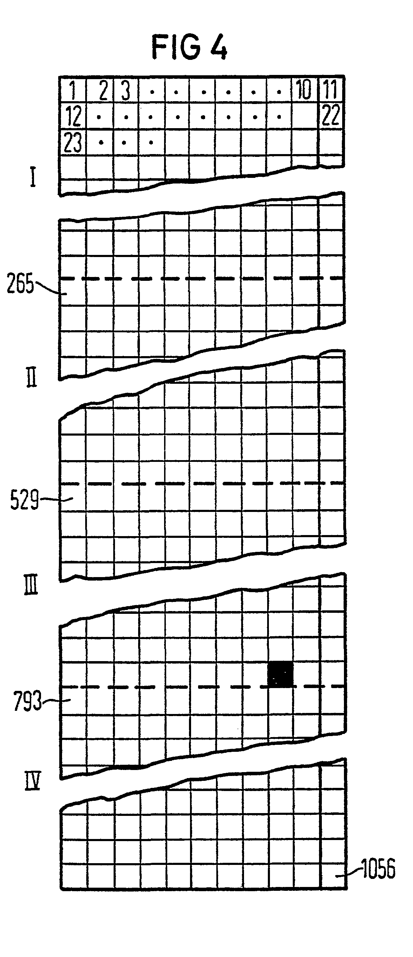

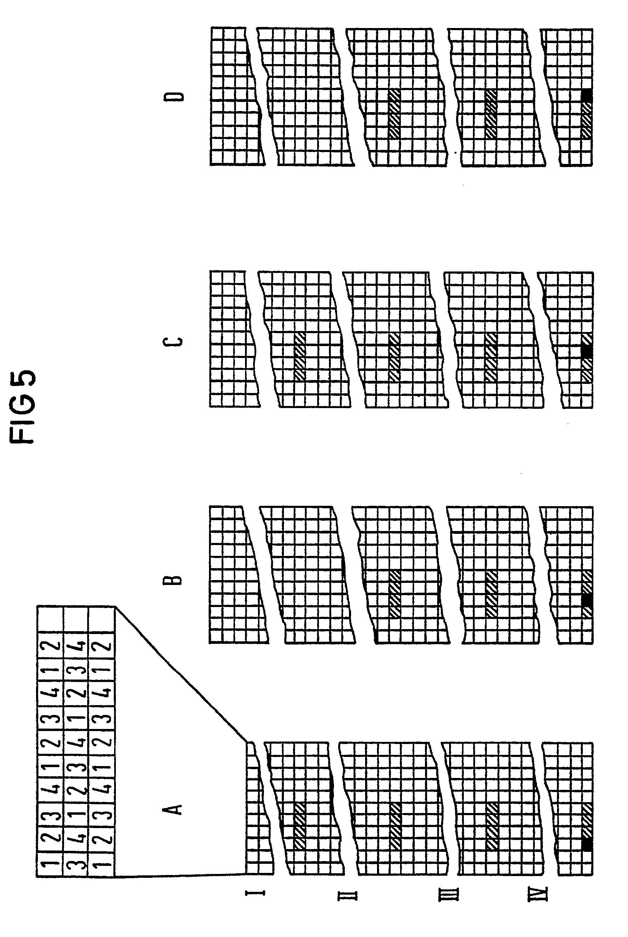

In Fig. 1 sind in Klammern Bitraten der zweiten Variante angegeben. Für diese gelten die Pulsrahmen in den Figuren 4 und 5.

Die Figur 4 zeigt einen Pulsrahmen für die Zwischen-Zeitmultiplexsignale der Bitrate von 621,776 Mbit/s. Dieser Pulsrahmen enthält eintausendsechsundfünfzig Zeitschlitze. Zwecks übersichtlicher Darstellung wurde der Pulsrahmen in Teile von elf Zeitschlitzen zerlegt und diese Teile untereinander in Form von sechsundneunzig Zeilen angeordnet. Weiter ist der Pulsrahmen in vier Teile I bis IV mit jeweils zweihundertvierundsechzig Zeitschlitzen eingeteilt. Die Folge der elften Zeitschlitze, die die rechte Spalte bilden, dienen der Aufnahme von Zusatzinformationen. Die restlichen Spalten dienen der Aufnahme von Nutzinformationen und stopfbaren Bits.

Die rechte Spalte für die Zusatzsignale enthält ein Rahmenkennungswort, eine Kanalnummer, Paritätsbits, Servicebits, eine Stopfinformation und eine Ordnungsnummer.

Im Fall der Übertragung eines 564,992-Mbit/s-Signals ist der schwarze Zeitschlitz für ein stopfbares Bit vorgesehen, das in Abhängigkeit von der Stopfinformation gestopft wird oder auch eine Nutzinformation überträgt.

Die Kanalnummer hat lediglich bei der Übertragung von 139,264-Mbit/s-Signalen eine Bedeutung. Paritätsbits geben eine Aussage über die Nutzinformationsbits im Pulsrahmen. Die Ordnungsnummer kennzeichnet die Zwischen-Zeitmultiplexsignale.

Figur 5 zeigt vier aufeinanderfolgende Pulsrahmen A bis D der Art des in Figur 4 gezeigten Pulsrahmens. Die Ziffern an der Oberseite des dort vergrößert dargestellten Pulsrahmens A bezeichnen vier bitweise verschachtelte 139,264Mbit/s-Signale. Für die Kanalnummern und die Stopfinformationen ist ein Überrahmen aus vier Pulsrahmen A-D gebildet, so daß jedes 139,264-Mbit/s-Signal eine eigene Stopfinformation und eine eigene Kanalnummer erhält.

Die schraffiert gekennzeichneten Bits sind in den Teilen I, II und III zweite stopfbare Bits und in den Teilen IV erste stopfbare Bits. Der schwarze Zeitschlitz wird in Abhängigkeit von der Vorhergehenden Stopfinformation gestopft und überträgt eine Nutzinformation. Die schraffierten Zeitschlitze sind jeweils fest gestopft, das heißt, es handelt sich um Zeitschlitze, die bei dieser Betriebsart überflüssig sind. Jedes 139,264-Mbit/s-Signal enthält in einem Überrahmen demnach dreizehn fest und einen variabel gestopften Zeitschlitz.

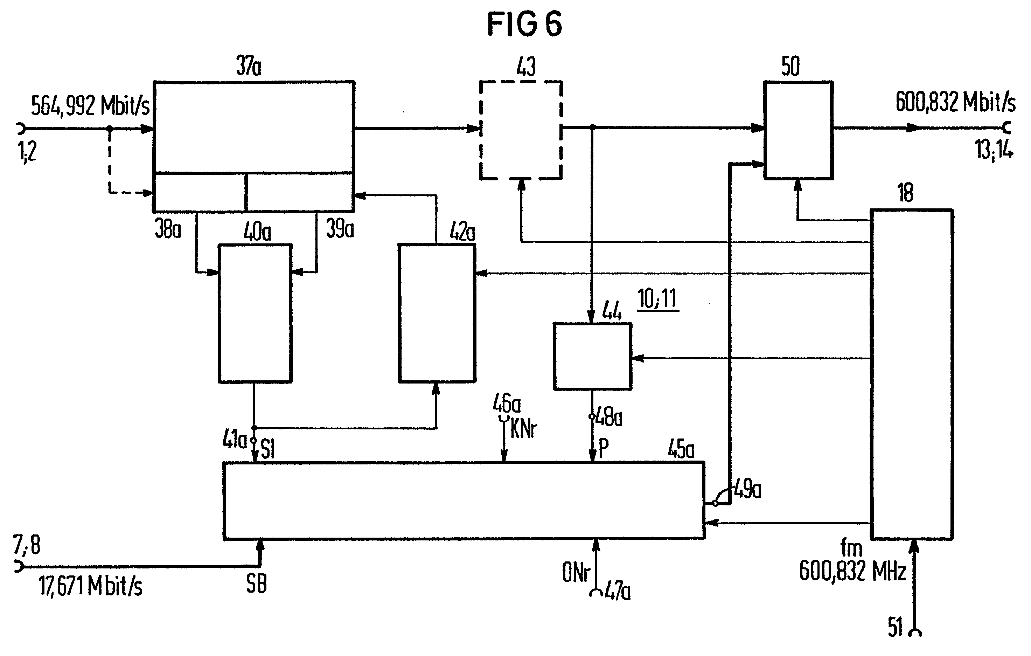

Figur 6 zeigt eine detaillierte Ausführung der Kanalteile 10 oder 11. Ein solcher Kanalteil 10;11 enthält einen Eingang 1;2 für ein 564,992-Mbit/s-Signal, einen elastischen Speicher 37a mit Einschreibteil 38a und Ausleseteil 39a, eine Stopfauswertung 40a, einen Stopfinformationsausgang 41a, eine Impulsausblendung 42a, einen Scrambler 43, eine Paritätsermittlung 44, einen Eingang 7;8 für ein 17,641-Mbit/s-Signal, einen Multiplexer 45 für Zusatzinformationen, einen Multiplexer 50, einen Ausgang 13 ; 14 und eine Taktversorgung 18 mit einem Takteingang 51 für einen 600,832-MHz-Takt.

Ein am Eingang 1;2 anliegendes plesiochrones 564,992-Mbit/s-Signal wird mit seinem Takt über den Einschreibteil 38a in den elastischen Speicher 37a eingeschrieben. Das Auslesen bewirkt die Taktversorgung 18 mit dem 600,832-MHz-Takt über die Impulsausblendung 42a und den Ausleseteil 39a. Die Stopfauswertung 40a vergleicht den Einschreib- und den Auslesetakt und gibt Stopfinformationen SI über Stopfinformationsausgang 41a an den Multiplexer 45a und an die Impulsausblendung 42a, die das Stopfen bewirkt. Das Ausgangssignal des elastischen Speichers 37a wird dem Multiplexer 50 über den Scrambler 43 zugeführt. Paritätsbits P werden von der Paritätsermittlung 44, deren Eingang mit dem Ausgang des Scramblers 43 verbunden ist, an den Eingang 48a abgegeben.

Der Multiplexer 45a faßt das Servicebits SB enthaltende 17,641-Mbit/s-Signal mit Servicebits SB am Eingang 7;8, die Stopfinformation SI, die Kanalnummer KNr am Eingang 46a, die Ordnungsnummer ONr am Eingang 47a und die Paritätsbits P am Eingang 48a zu einem Signal zusammen, das über den Ausgang 49a ebenfalls dem Multiplexer 50 zugeführt wird, der seinerseits ein 600,832-Mbit/s-Signal an den Ausgang 13;14 abgibt.

Die Taktversorgung 18 versorgt die Multiplexer 45a und 50, den Scrambler 43, die Paritätsermittlung 44 und die Impulsausblendung 42a mit ihren Takten.

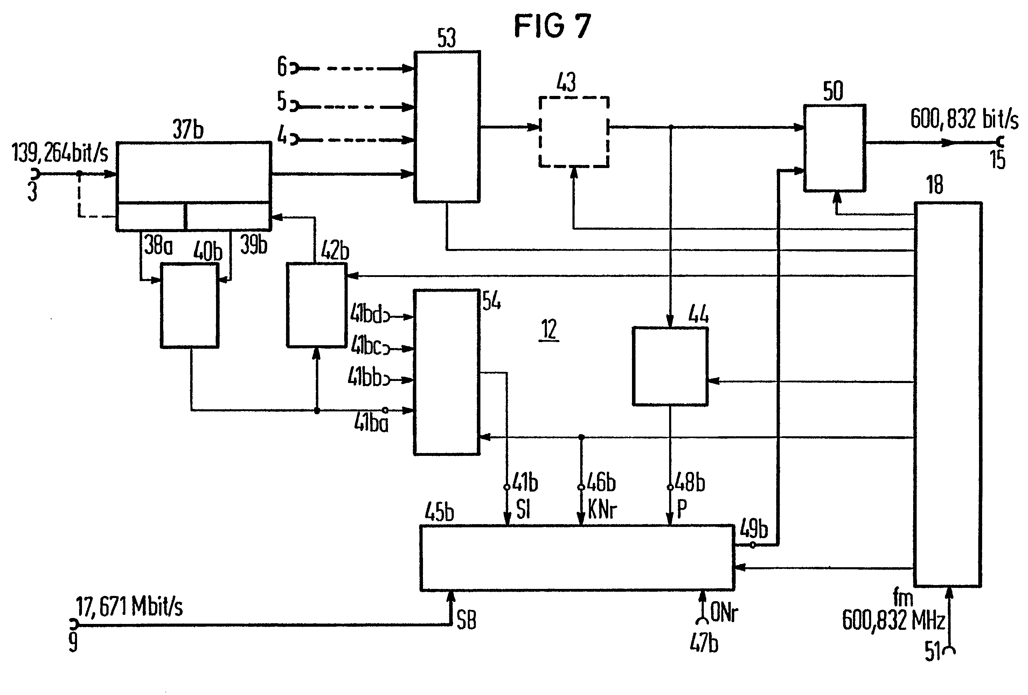

Figur 7 zeigt den Kanalteil 12. Dieser enthält vier Eingänge 3-6 für 139,264-Mbit/s-Signale, von denen nur der mit dem Bezugszeichen 3 gezeigt ist. Entsprechend ist auch nur ein elastischer Speicher 37b mit Einschreibteil 38b und Ausleseteil 32b, eine Stopfauswertung 40b und eine Impulsausblendung 42b gezeigt. Weiter sind ein Multiplexer 53, ein Stopfinformations-Multiplexer 54, der Scrambler 43, der Multiplexer 50 mit dem Ausgang 15, die Paritätsbitermittlung 44, ein Multiplexer 45b für Zusatzinformationen und die Taktversorgung 18 enthalten.

Im Gegensatz zur Anordnung nach der Figur 6 müssen erst vier 139,264-Mbit/s-Signale jeweils einen elastischen Speicher 37b durchlaufen, ehe sie im Multiplexer 53 zusammengefaßt werden, und bis sie, wie bei den Kanalteilen 10 und 11 nach Figur 6 über den Scrambler 43 dem Multiplexer 50 zugeführt werden. Die von den vier Stopfauswertungen 40b über Stopfinformationsausgänge 41ba -41bd abgegebenen Stopfinformationen SI werden mit den Stopfinformationen an den Stopfinformationsausgängen 41bb, 41bc und 41bd im Stopfinformations-Multiplexer 54 zusammengefaßt und über den Eingang 41b dem Multiplexer 45b zugeführt. In diesen werden wie in Fig. 6 weiter Servicebits SB eines 17,641-Mbit/s-Signals am Eingang 9, Kanalnummern KNr über den Eingang 46b, Paritätsbits über den Eingang 48b und Ordnungsnummern ONr über den Eingang 47b zugeführt. Das Ausgangssignal des Multiplexers 45b wird über den Ausgang 49b ebenfalls dem Multiplexer 50 zugeführt, der ein 600,832-Mbit/s-Signal am Ausgang 15 abgibt. Die Taktversorgung 18 arbeitet wie die im Kanalteil 10 oder 11 nach Figur 6, sie muß lediglich vier Impulsausblendungen 42b versorgen.

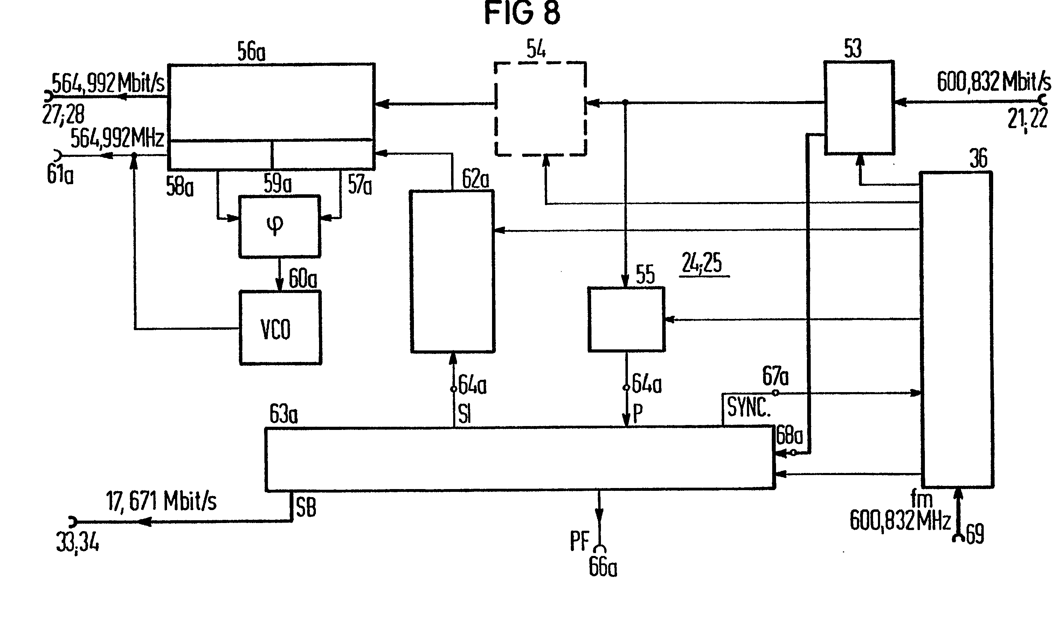

Figur 8 zeigt einen Kanalteil 24 oder 25. Dieser enthält einen Eingang 21;22 für einen 600,832-Mbit/s-Signal, einen Demultiplexer 53, einen Descrambler 54, einen elastischen Speicher 56a mit Einschreibteil 57a und Ausleseteil 58a, einen Ausgang 27;28 für ein 564,992-Mbit/s-Signal, einen Diskriminator 59a, einen spannungsgesteuerten Oszillator 60a, einen Ausgang 61a für einen 564,992MHz-Takt, eine Impulsausblendung 62a, einen Demultiplexer 63a für Zusatzinformation, Synchronisationsauswertung und Paritätsbitauswertung mit einem Eingang 68a und mit einem Eingang 65a für Paritätsbits P, sowie mit einem Ausgang 33;34 für Servicebits SB in einem 17,641-Mbit/s-Signal, mit einem Ausgang 64a für eine Stopfinformation SI, mit einem Ausgang 66a für Paritätsfehlersignale PF und mit einem Synchronisierausgang 67a, ferner eine Paritätsermittlung 55 und eine Taktversorgung 36 mit einem Takteingang 69 für einen 600,832-MHz-Takt.

Das in den Eingang 21-22 eingespeiste 600,832-Mbit/s-Signal wird im Demultiplexer 53 derart zerlegt, daß ein Signal über den Descrambler 54 und den elastischen Speicher 56a dem Ausgang 27;28 und die Zusatzinformationen dem Eingang 68a des Demultiplexers 63a zugeführt werden. Letzterer gibt am Ausgang 64a die Stopfinformation SI ab, die über die Impulsausblendung 62a zusammen mit dem Diskriminator 59a und dem spannungsgesteuerten Oszillator 60a das Signal im elastischen Speicher 56a entstopft. Der Demultiplexer 63a gibt weiter Servicebits SB am Ausgang 33;34, Paritätsfehlersignale PF am Ausgang 66a und ein Synchronisiersignal für die Taktversorgung 69a am Ausgang 67a ab. Die Paritätsermittlung 55 gibt ihre Ergebnisse P über die Eingang 65a an den Demultiplexer 63a.

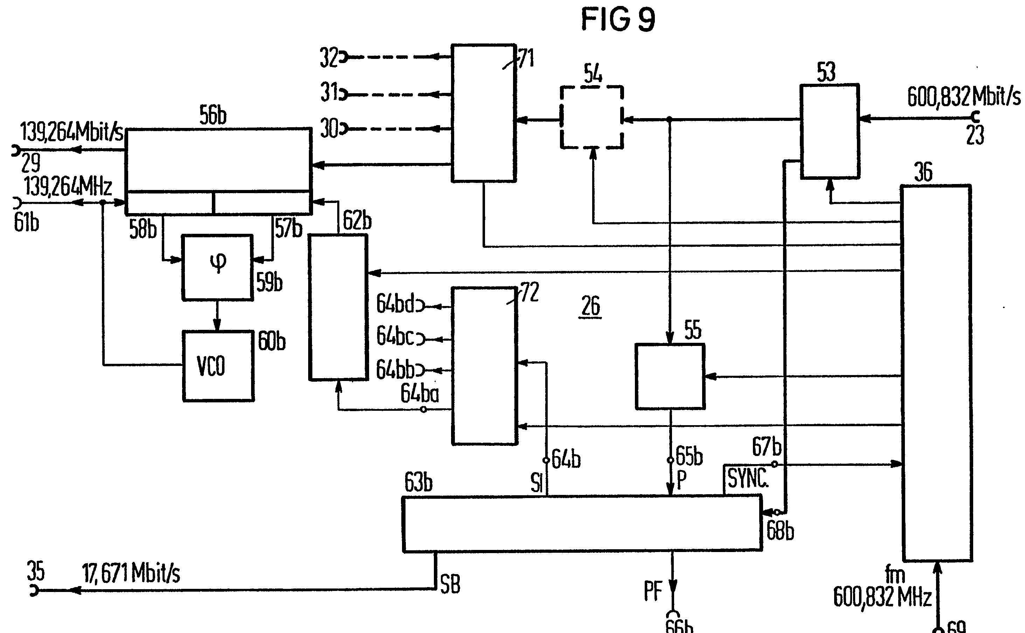

Figur 9 zeigt den Kanalteil 26. Dieser enthält gegenüber den Kanalteilen 24 und 25 nach Figur 8 im Anschluß an den Descrambler 54 einen Demultiplexer 71, der sein Eingangssignal in vier Signale zerlegt, die jeweils über einen elastischen Speicher 56b an die Ausgänge 29-32 gelangen. Es ist nur ein elastischer Speicher 56b mit Einschreibteil 57b und Ausleseteil 58b, ein Diskriminator 59b, ein spannungsgesteuerter Oszillator 60b, ein Taktausgang 61b und eine Impulsausblendung 62b für jeden Ausgang 29-32 gezeigt. Weiter ist dem Ausgang 64b für Stopfinformation SI des Demultiplexers 63b ein Stopfinformations-Demultiplexer 72 nachgeschaltet, der den vier Impulsausblendungen 62b über Stopfinformationsausgänge 64ba-64bd individuelle Stopfinformationen SI zuführt.

**Patentansprüche**

1. Digitalsignal-Multiplexverfahren, unter Verwendung eines Multiplexteils (1–18), in dem erste plesiochrone 139,264- oder 564,992-Mbit/s-Signale in ersten Kanalteilen (10–12) unter Stopfen und Einblenden von Zusatzsignalen in erste synchrone Zwischen-Zeitmultiplexsignale umgesetzt werden und in dem ein Multiplexer (16) diese bitweise zu einem ersten Zeitmultiplexsignal höherer Ordnung verschachtelt, und unter Verwendung eines Demultiplexteils (19–36), in dem ein zweites Zeitmultiplexsignal höherer Ordnung durch einen Demultiplexer (20) in zweite Zwischen-Zeitmultiplexsignale aufgetrennt wird und in dem in zweiten Kanalteilen (24–26) diese unter Entstopfen und Ausblenden von Zusatzsignalen in plesiochrone 139,264- oder 564,992-Mbit/s-Signale umgesetzt werden, dadurch gekennzeichnet, daß für 564,992-Mbit/s-Signale jeder n-te Zeitschlitz im Pulsrahmen der Zwischen-Zeitmultiplexsignale für Zusatzsignale und die restlichen Zeitschlitze für die zu übertragende Nutzinformation und ein erstes stopfbares Bit vorgesehen sind, daß für jeweils vier 139,264-Mbit/s-Signale jeder n-te Zeitschlitz im Pulsrahmen der Zwischen-Zeitmultiplexsignale für Zusatzsignale und die restlichen Zeitschlitze für die vier bitweise verschachtelt zu übertragenden Nutzinformationen und je ein erstes und m zweite stopfbare Bits vorgesehen sind, daß für jeweils vier 139,264-Mbit/s-Signale ein Überrahmen aus vier Pulsrahmen vorgesehen ist, in dem in jedem Pulsrahmen als Zusatzsignal unter anderen eine Stopfinformation (SI) und eine Kanalnummer (KNr) eines 139,264-Mbit/s-Signals eingefügt sind und daß die zweiten Kanalteile (24–26) für eine Rückumsetzung aus dem gleichen Pulsrahmen vorgesehen sind.

2. Digitalsignal-Multiplexverfahren nach Anspruch 1, dadurch gekennzeichnet, daß für die Zwischen-Zeitmultiplexsignale eine Bitfolgefrequenz von 600,832 Mbit/s, ein Pulsrahmen mit fünfhundertvierundvierzig Zeitschlitzen, n=17 und m=1 gewählt ist.

3. Digitalsignal-Multiplexverfahren nach Anspruch 2, dadurch gekennzeichnet, daß der Pulsrahmen in vier Sätze (I-IV) mit je einhundertsechsunddreißig Zeitschlitzen unterteilt ist, daß in der Folge der siebzehnten Zeitschlitze im ersten Satz (I) die ersten fünf Zeitschlitze für ein Rahmenkennungswort (RKW), der sechste und siebente Zeitschlitz zyklisch für die Kanalnummer (KNr) und der achte Zeitschlitz für ein erstes Paritätsbit (P1) über die Nutzinformationsbits im zweiten und dritten Satz des vorangegangenen Pulsrahmens vorgesehen sind, daß in der Folge der siebzehnten Zeitschlitze im zweiten (II) und vierten (IV) Satz diese für Service-Information (SB) vorgesehen sind und daß in der Folge der siebzehnten Zeitschlitze im dritten Satz (III) die ersten fünf Zeitschlitze für eine Stopfinformation (SI), der sechste und siebente Zeitschlitz für eine Ordnungsnummer (ONr) des zu bildenden Zwischen-Zeitmultiplexsignals und der achte Zeitschlitz für ein zweites Paritätsbit (P2) über die Nutzinformationsbits im vierten Satz (IV) des vorangegangenen Pulsrahmens und im ersten Satz (I) des gegenwärtigen Pulsrahmens vorgesehen sind.

4. Digitalsignal-Multiplexverfahren nach Anspruch 2, dadurch gekennzeichnet, daß für ein 564,992-Mbit/s-Signal im dritten Satz (III) der einhundertachtundzwanzigste Zeitschlitz für das erste stopfbare, in Abhängigkeit von der Stopfinformation (SI) zu stopfende oder Nutzinformation übertragende Bit vorgesehen ist.

5. Digitalsignal-Multiplexverfahren nach Anspruch 1, **dadurch gekennzeichnet**, daß für vier 139,264-Mbit/s-Signale im dritten Satz (III) der einhundertachtundzwanzigste bis einhunderteinunddreißigste Zeitschlitz für erste stopfbare Bits vorgesehen sind, daß im ersten Satz (I) jeweils der einhundertachtundzwanzigste bis einhunderteinunddreißigste Zeitschlitz für zweite stopfbare Bits vorgesehen sind, daß das erste stopfbare Bit in jenen 139,264-Mbit/s-Signalen, deren Kanalnummer (KNr) im jeweiligen Pulsrahmen steht, in Abhängigkeit von der Stopfinformation (SI) in diesem Pulsrahmen gestopft oder mit Nutzinformation belegt wird und daß alle anderen ersten und zweiten stopfbaren Bits fest gestopft werden.

6. Digitalsignal-Multiplexverfahren nach Anspruch 1, **dadurch gekennzeichnet**, daß für die Zwischen-Zeitmultiplexsignale eine Bitfolgefrequenz von 621,776 Mbit/s, ein Pulsrahmen mit eintausendsechsundfünfzig Zeitschlitzen, n=11 und alternierend m=3 und m=2 gewählt ist.

7. Digitalsignal-Multiplexverfahren nach Anspruch 6, **dadurch gekennzeichnet**, daß der Pulsrahmen in vier Sätze (I-IV) mit je zweihundertvierundsechzig Zeitschlitzen unterteilt ist, daß in der Folge der elften Zeitschlitze elf Zeitschlitze für ein Rahmenkennungswort, für die Kanalnummer, für eine Ordnungsnummer des zu bildenden Zwischen-Zeitmultiplexsignals, und für Paritätsbits über die Nutzinformationsbits des vorangegangenen Pulsrahmens vorgesehen sind, daß in der Folge der elften Zeitschlitze achtzig Zeitschlitze für Service-Information vorgesehen sind und daß in der Folge der elften Zeitschlitze fünf Zeitschlitze für eine Stopfinformation vorgesehen sind.

8. Digitalsignal-Multiplexverfahren nach Anspruch 6, **dadurch gekennzeichnet**, daß für ein 564,992-Mbit/s-Signal im vierten Satz (IV) der zweihundertsechsundfünfzigste Zeitschlitz für das erste stopfbare, in Abhängigkeit von der Stopfinformation zu stopfende oder Nutzinformation übertragende Bit vorgesehen ist.

9. Digitalsignal-Multiplexverfahren nach Anspruch 6, **dadurch gekennzeichnet**, daß für vier 139,264-Mbit/s-Signale im vierten Satz der zweihundertsechsundfünfzigste bis zweihundertneunundfünfzigste Zeitschlitz für erste stopfbare Bits vorgesehen sind, daß in jedem zweiten Pulsrahmen im ersten Satz (I) jeweils der zweihundertsechsundfünfzigste bis zweihundertneunundfünfzigste Zeitschlitz für zweite stopfbare Bits vorgesehen sind, daß im zweiten und dritten Satz (II,III) jeweils der zweihundertsechsundfünfzigste bis zweihundertneunundfünfzigste Zeitschlitz für zweite stopfbare Bits vorgesehen sind, daß das erste stopfbare Bit in jenen 139,264-Mbit/s-Signalen, deren Kanalnummer im jeweiligen Pulsrahmen steht, in Abhängigkeit von der Stopfinformation in diesem Pulsrahmen gestopft oder mit Nutzinformation belegt wird und daß alle anderen ersten und zweiten stopfbaren Bits fest gestopft werden.

10. Digitalsignal-Multiplexverfahren nach einem der vorhergehenden Ansprüche, **dadurch gekenn-**

**zeichnet**, daß die Pulsrahmen der ersten Zwischen-Zeitmultiplexsignale synchron sind.

## Claims

1. Digital signal multiplexing method, using a multiplexing section (1–18), in which first plesiochronous 139.264-Mbit/s or 564.992-Mbit/s signals are converted in first channel sections (10–12) into first synchronous intermediate time-division multiplex signals by stuffing and insertion of additional signals and in which a multiplexer (16) interleaves the said first intermediate signals bit by bit to form a first time-division multiplex signal of higher order, and using a demultiplexing section (19–36), in which a second time-division multiplex signal of higher order is separated by a demultiplexer (20) into second intermediate time-division multiplex signals and in which the said second intermediate signals are converted in second channel sections (24–26) into plesiochronous 139.264-Mbit/s or 564.992-Mbit/s signals by destuffing and extraction of additional signals, characterized in that, for 564.992-Mbit/s signals, each nth time slot in the pulse frame of the intermediate time-division multiplex signals is provided for additional signals and the remaining time slots are provided for the useful information to be transmitted and a first stuffable bit, in that, for in each case four 139.264-Mbit/s signals, each nth time slot in the pulse frame of the intermediate time-division multiplex signals is provided for additional signals and the remaining time slots are provided for the four useful information items to be transmitted, interleaved bit by bit, and a first stuffable bit and m second stuffable bits in each case, in that, for in each case four 139.264-Mbit/s signals, a multiframe of four pulse frames is provided, in which a stuffing information (SI) and a channel number (KNr) of a 139.264-Mbit/s signal are inserted, inter alia, in each pulse frame as additional signal and in that the second channel sections (24–26) are provided for a conversion back from the same pulse frame.

2. Digital signal multiplexing method according to Claim 1, characterized in that, for the intermediate time-division multiplex signals, a bit sequence frequency of 600.832 Mbit/s, a pulse frame with five hundred and forty-four time slots, n = 17 and m = 1 is chosen.

3. Digital signal multiplexing method according to Claim 2, characterized in that the pulse frame is subdivided into four blocks (I–IV) with one hundred and thirty-six time slot each, in that, taking every seventeenth time slot in the first block (I), the first five time slots are provided for a frame alignment signal (RKW), the sixth and seventh time slots are provided cyclically for the channel number (KNr) and the eighth time slot is provided for a first parity bit (P1) on the useful information bits in the second and third blocks of the preceding pulse frame, in that, taking every seventeenth time slot in the second (II) and fourth (IV) blocks, these are provided for service information (SB), and in that, taking every seventeenth time slot in the third block (III),the first five time slots are provided for a stuffing information (SI), the sixth and seventh time slots are provided for a sequence number (ONr) of the intermediate time-division multiplex signal to be formed and the eighth time slot is provided for a second parity bit (P2) on the useful information bits in the fourth block (IV) of the preceding pulse frame and in the first block (I) of the current pulse frame.

4. Digital signal multiplexing method according to Claim 2, characterized in that, for a 564.992-Mbit/s signal in the third block (III), the one hundred and twenty-eighth time slot is provided for the first stuffable bit, to be stuffed in dependence on the stuffing information (SI) or transmitting useful information.

5. Digital signal multiplexing method according to Claim 1, characterized in that, for four 139.264-Mbit/s signals in the third block (III), the one hundred and twenty-eighth to one hundred and thirty-first time slots are provided for first stuffable bits, in that, in the dirst block (I), the one hundred and twenty-eighth to one hundred and thirty-first time slots are in each case provided for second stuffable bits, in that the first stuffable bit is stuffed in those 139.264-Mbit/s signals whose channel number (KNr) is in the respective pulse frame, in dependence on the stuffing information (SI) in this pulse frame, or is occupied with useful information, and in that all other first and second stuffable bits are stuffed in a fixed way.

6. Digital signal multiplexing method according to Claim 1, characterized in that, for the intermediate time-division multiplex signals, a bit sequence frequency of 621.776-Mbit/s, a pulse frame with one thousand and fifty-six time slots, n = 11 and alternatingly m = 3 and m = 2 is chosen.

7. Digital signal multiplexing method according to Claim 6, characterized in that the pulse frame is subdivided into four blocks (I–IV) with two hundred and sixty-four time slots each, in that, taking every eleventh time slot, eleven time slots are provided for a frame alignment signal, for the channel number, for a sequence number of the intermediate time-division multiplex signal to be formed, and for parity bits on the useful information bits of the preceding pulse frame, in that, taking every eleventh time slots, eighty time slots are provided for service information, and in that, taking every eleventh time slots five time slots are provided for a stuffing information.

8. Digital signal multiplexing method according to Claim 6, characterized in that, for a 564.992-Mbit/s signal in the fourth block (IV), the two hundredth and fifty-sixth time slot is provided for the first stuffable bit, to be stuffed in dependence on the stuffing information, or transmitting useful information.

9. Digital signal multiplexing method according to Claim 6, characterized in that, for four 139.264-Mbit/s signals in the fourth block, the two hundred and fifty-sixth to two hundred and fifty-ninth time slots are provided for first stuffable bits, in that, in each second pulse frame in the first block (I), the two hundred and fifty-sixth to two hundred and fifty-ninth time slots are in each case provided for second stuffable bits, in that, in the second and third blocks (II, III) the two hundred and fifty-sixth to two hundred and fifty-ninth time slots are in each case provided for second stuffable bits, in that the first stuffable bit is stuffed in those 139.264-Mbit/s signals whose channel number is in the respective pulse frame, in dependence on the stuffing information in this pulse frame, or is occupied with useful information, and in that all other first and second stuffable bits are stuffed in a fixed way.

10. Digital signal multiplexing method according to one of the preceding claims, characterized in that the pulse frames of the first intermediate time-division multiplex signals are synchronous.

**Revendications**

1. Procédé de multiplexage de signaux numériques utilisant une partie de multiplexage (1–18), dans laquelle des premiers signaux plésiochrones à 139, 264 ou 564,992 Mbits/s sont convertis, dans des premiers éléments de canaux (10–12), au moyen d'un bourrage et d'une introduction de signaux supplémentaires, en des premiers signaux synchrones intermédiaires de multiplexage, et dans laquelle un multiplexeur (16) réalise l'imbrication bit-à-bit de ces signaux pour former un premier signal de multiplexage temporel d'ordre supérieur, et une partie de démultiplexage (19–36), dans laquelle un second signal de multiplexage temporel d'ordre supérieur est subdivisé, par un démultiplexeur (20), en des seconds signaux intermédiaires de multiplexage temporel, et dans lequel, dans des seconds éléments de canaux (24–26), ces signaux sont convertis, moyennant la suppression du bourrage et l'extraction de signaux additionnels, en des signaux plésiochrones à 139, 264 ou de 564,992 Mbits/s, caractérisé par le fait que, pour des signaux à 564,992 Mbits/s, chaque n-ème créneau temporel dans la trame d'impulsions des signaux intermédiaires de multiplexage temporel est prévu pour des signaux additionnels et les autres créneaux temporels sont prévus pour l'information utile devant être transmise et pour un premier bit utilisable pour le bourrage, que, pour respectivement quatre signaux à 139,264 Mbits/s, chaque n-ème créneau temporel de la trame d'impulsions des signaux intermédiaires de multiplexage temporel est prévu pour les signaux additionnels, et les autres créneaux temporels sont prévus pour les quatre informations utiles devant être transmises d'une manière imbriquée bit-à-bit et pour respectivement un premier et m seconds bits utilisables pur le bourrage, que, pour respectivement quatre signaux à 139,264 Mbits/s, il est prévu une trame de rang supérieur formée par quatre trames d'impulsions et dans laquelle, dans chaque trame d'impulsions, notamment une information de bourrage (SI) et un numéro de canal (KNr) d'un signal à 139,264 Mbits/s insérés à titre de signal supplémentaire, et que les seconds éléments de canaux (24–26) sont prévus pour une conversion inverse à partir de la même trame d'impulsions.

2. Procédé de multiplexage de signaux numériques suivant la revendication 1, caractérisé par le fait que, pour les signaux intermédiaires de multiplexage temporel, on choisit une fréquence de récurrence des bits égale à 600,832 Mbits/s, une trame d'impulsions contenant cinq cents quarante-quatre créneaux temporels, n = 17 et m = 1.

3. Procédé de multiplexage de signaux numériques suivant la revendication 2, caractérisé par le fait que la trame d'impulsions est subdivisée en quatre ensembles (I–IV) comportant chacun cent trente-six créneaux temporels, qu'à la suite du dix-septième créneau temporel, dans le premier ensemble (I), les cinq premiers créneaux temporels sont prévus pour un indicatif de trame (RKW), les sixième et septième créneaux temporels sont prévus pour le numéro de canal (KNr), et le huitième créneau temporel est prévu pour un premier bit de parité (P1) concernant les bits d'information utile dans les second et troisième ensembles de la trame d'impulsions précédentes, qu'à la suite du dix-septième créneau temporel, dans le second ensemble (II) et dans le quatrième ensemble (IV), ces ensembles sont prévus pour une information de service (SB), et qu'à la suite du dix-septième créneau temporel, dans le troisième ensemble (III), les cinq premiers créneaux temporels sont prévus pour une information de bourrage (SI), les sixième et septième créneaux temporels sont prévus pour un numéro d'ordre (ONr) du signal intermédiaire de multiplexage devant être formé et le huitième créneau temporel est prévu pour un second bit de parité (P2) concernant les bits d'information utile situés dans le quatrième ensemble (IV) de la trame d'impulsions précédente et dans le premier ensemble (I) de la présente trame d'impulsions.

4. Procédé de multiplexage de signaux numériques suivant la revendication 2, caractérisé par le fait que, pour un signal à 564,992 Mbits/s, dans le troisième ensemble (III), le cent-vingt-huitième créneau temporel est prévu pour le premier bit utilisable pour le bourrage, qui doit être utilisé pour le bourrage en fonction de l'information de bourrage (SI) ou est transmis en tant qu'information utile.

5. Procédé de multiplexage de signaux numériques suivant la revendication 1, caractérisé par le fait que, pour quatre signaux à 139,264 Mbits/s, dans le troisième ensemble (III), les créneaux temporels allant du cent-vingt-huitième au cent-trentième sont prévus pour des premiers bits utilisables pour le bourrage, que, dans le premier ensemble (I), respectivement les créneaux temporels allant du cent-vingt-huitième au cent-trentième sont prévus pour deux bits utilisables pour le bourrage, que le premier bit utilisable pour le bourrage est introduit à titre de bourrage dans les signaux à 139,264 Mbits/s, dont le numéro de canal (KNr) est situé dans la trame d'impulsions respective, en fonction de l'information de bourrage (SI) présente dans cette trame d'impulsions ou est occupé par une information utile, et que tous les autres premiers et seconds bits utilisables pour le bourrage sont utilisés de façon fixe en tant que bourrage.

6. Procédé de multiplexage de signaux numériques suivant la revendication 1, caractérisé par le fait que pour les signaux intermédiaires de multiplexage temporel, on choisit une fréquence de récurrence des bits égale à 621,776 Mbits/s, une trame d'impulsions comportant 1056 créneaux temporels, n = 11 et alternativement m = 3 et m = 2.

7. Procédé de multiplexage de signaux numériques suivant la revendication 6, caractérisé par le fait que la trame d'impulsions est subdivisée en quatre ensembles (I–IV) comportant chacun deux cent soixante quatre créneaux temporels, qu'à la suite du onzième créneau temporel, onze créneaux temporels sont prévus pour un indicatif de trame, pour le numéro de canal, pour un numéro d'ordre du signal intermédiaire de multiplexage temporel devant être formé, et pour des bits de parité concernant les bits d'information utile de la trame d'impulsions précédente, qu'à la suite du onzième créneau temporel, quatre-vingts créneaux temporels sont prévus pour une information de service, et qu'à la suite du onzième crénau temporel, cinq crénaux temporels sont prévus pour une information de bourrage.

8. Procédé de multiplexage de signaux numériques suivant la revendication 6, caractérisé par le fait que pour un signal à 564, 992 Mbits/s, dans le quatrième ensemble (IV) le deux cent cinquante-sixième créneau temporel est prévu pour le premier bit utilisable pour le bourrage, qui doit être utilisé comme bourrage en fonction de l'information de bourrage ou transmet une information utile.

9. Procédé de multiplexage de signaux numériques suivant la revendication 6, caractérisé par le fait que pour quatre signaux à 139,264 Mbits/s, dans le quatrième ensemble, les créneaux temporels allant du deux cent-cinquante-sixième jusqu'au deux cent-cinquante-neuvième sont prévus pour des premiers bits utilisables pour le bourrage, que dans la seconde trame d'impulsions, dans le premier ensemble (I), respectivement les créneaux temporels allant du deux cent-cinquante-sixième jusqu'au deux cent cinquante-neuvième sont prévus pour des seconds bits utilisables pour le bourrage, que dans les second et troisième ensembles (II, III), respectivement les créneaux temporels allant du deux cent cinquante-sixième jusqu'au deux cents cinquante-neuvième, sont prévus pour des seconds bits utilisables pour le bourrage, que le premier bit utilisable pour le bourrage est utilisé à titre de bourrage dans les signaux à 139,264 Mbits/s, dont le numéro de canal est situé dans la trame d'impulsions respective, en fonction de l'information de bourrage présente dans cette trame d'impulsions ou est occupé par une information utile, et que tous les autres premiers et seconds bits utilisables pour le bourrage sont utilisés de façon fixe pour le bourrage.

10. Procédé de multiplexage de signaux numériques suivant l'une des revendications précédentes, caractérisé par le fait que les trames d'impulsions des premiers signaux intermédiaires de multiplexage temporel sont synchrones.

# FIG 1

1 — 564,992 Mbit/s — 10 — 600,832 Mbit/s (621,776 Mbit/s)

7 — 17,671 Mbit/s (47,104 Mbit/s)

2 — 564,992 Mbit/s — 11 — 600,832 Mbit/s (621,776 Mbit/s)

8 — 17,671 Mbit/s (47,104 Mbit/s)

3 — 139,264 Mbit/s — 12
4 — 139,264 Mbit/s
5 — 139,264 Mbit/s
6 — 139,264 Mbit/s — 600,832 Mbit/s (621,776 Mbit/s)

9 — 17,671 Mbit/s (47,104 Mbit/s)

13
16
14 — 1802,496 Mbit/s (1865,328 Mbit/s)
15 — 17

18

27 — 564,992 Mbit/s — 24 — 600,832 Mbit/s (621,776 Mbit/s)

33 — 17,671 Mbit/s (47,104 Mbit/s)

28 — 564,992 Mbit/s — 25 — 600,832 Mbit/s (621,776 Mbit/s)

34 — 17,671 Mbit/s (47,104 Mbit/s)

29 — 139,264 Mbit/s — 26
30 — 139,264 Mbit/s
31 — 139,264 Mbit/s
32 — 139,264 Mbit/s — 600,832 Mbit/s (621,776 Mbit/s)

35 — 17,671 Mbit/s (47,104 Mbit/s)

21
20
22 — 1802,496 Mbit/s (1865,328 Mbit/s)
23 — 19

36

# FIG 2

# FIG 3

EP 0 183 227 B1

# FIG 4

# FIG 5

| 1 | 2 | 3 | 4 | 1 | 2 | 3 | 4 | 1 | 2 | |
| 3 | 4 | 1 | 2 | 3 | 4 | 1 | 2 | 3 | 4 | |
| 1 | 2 | 3 | 4 | 1 | 2 | 3 | 4 | 1 | 2 | |

A          B          C          D

I

II

III

IV

EP 0 183 227 B1

# FIG 6

564,992 Mbit/s

1;2

37a

38a  40a  39a

42a

43

10;11

44

46a KNr

48a P

45a

50

600,832 Mbit/s

13;14

18

41a SI

7;8

17,671 Mbit/s

SB

ONr 47a

49a

fm
600,832 MHz

51

EP 0 183 227 B1

# FIG 7

EP 0 183 227 B1

FIG 8

# FIG 9

139,264 Mbit/s

600,832 Mbit/s

139,264 MHz

EP 0 183 227 B1

26

17,671 Mbit/s

fm
600,832 MHz